# EUROPÄISCHE PATENTSCHRIFT

(11) **EP 0 922 848 B1**
(45) Veröffentlichungstag und Bekanntmachung des Hinweises auf die Patenterteilung: **17.09.2003**
(21) Anmeldenummer: 98119554.8
(22) Anmeldetag: 16.10.1998
(51) Int. Cl.: F02F 1/42, F02B 31/06

(54) **Saugkanal für eine Brennkraftmaschine**
Intake conduit for an internal combustion engine
Conduit d'admission pour un moteur à combustion interne

(30) Priorität: 10.12.1997 DE 19754736
(43) Veröffentlichungstag der Anmeldung: 16.06.1999
(73) Patentinhaber: Dr.Ing. h.c.F. Porsche Aktiengesellschaft, 70435 Stuttgart (DE)
(72) Erfinder: Müller, Stephan, 71229 Leonberg (DE)

(56) Entgegenhaltungen:
- DE-A- 4 437 279
- DE-A- 19 511 136
- PATENT ABSTRACTS OF JAPAN vol. 008, no. 154 (M-310), 18. Juli 1984 (1984-07-18) & JP 59 051128 A (TOYOTA JIDOSHA KK), 24. März 1984 (1984-03-24)

## Beschreibung

Die Erfindung betrifft einen Saugkanal für eine Brennkraftmaschine nach der Gattung des Anspruchs 1.

Ein derartiger Saugkanal ist beispielsweise in der DE 44 37 279 A1 beschrieben und setzt sich aus einem im Zylinderkopf ausgebildeten Einlaßkanal und einem an den Zylinderkopf angeflanschten Saugstutzen zusammen, der mit der Sauganlage der Brennkraftmaschine verbunden ist. Im Saugstutzen ist eine Aufnahme für eine Einspritzdüse ausgebildet, deren Kraftstoffstrahl in den Einlaßkanal gerichtet ist. Im Saugstutzen ist darüber hinaus eine Leiteinrichtung mit einem schwenkbaren Leitabschnitt angeordnet, der auf der zylinderkopfabgewandten Seite der Leiteinrichtung ausgebildet ist. Diese Leiteinrichtung ist so im Saugstutzen angeordnet, daß sie bis in den Eintrittsbereich des Einlaßkanals ragt. Durch diese Leiteinrichtung soll zusätzlich zur definierten Kanalgeometrie bei geringer Motorlast - Leerlauf und Teillast - eine gezielte Wirbelbildung (Tumble) im Brennraum hervorgerufen werden. Derartige Leiteinrichtungen haben jedoch den Nachteil, daß sie bei höheren Luftdurchsätzen im Nennleistungsbereich drosselnd wirken und somit einer optimalen Kanalausbildung für den Nennleistungsbereich entgegen wirken. Darüber hinaus kommt es bei derartigen Saugkanalgeometrien bei höheren Luftdurchsätzen im Bereich des stärker gekrümmten Einlaßkanalabschnittes zu Ablösungen der Strömung am krümmungsinneren Kanalabschnitt, so daß auch dadurch die Gemischaufbereitung im Nennleistungsbereich nachteilig beeinflußt wird.

Es ist demgegenüber die Aufgabe der Erfindung, einen gattungsgemäßen Saugkanal für eine Brennkraftmaschine dahingehend zu verbessern, daß die Gemischaufbereitung bei geringen Luftdurchsätzen, im Bereich Leerlauf und Teillast, durch gezielte Wirbelerzeugung im Brennraum verbessert wird und gleichzeitig ein hoher und gleichmäßiger Luftdurchsatz im Nennleistungsbereich der Brennkraftmaschine sichergestellt ist.

Diese Aufgabe wird erfindungsgemäß mit den kennzeichnenden Merkmalen des Hauptanspruches gelöst. Durch Anordnung der Leiteinrichtung im Einlaßkanat und Erstreckung der Leiteinrichtung bis in den stärker gekrümmten, brennraumnahen Abschnitt des Einlaßkanals kann in Abhängigkeit von der Stellung des verstellbaren Leitabschnittes sowohl eine gezielte Wirbelbildung verursacht werden als auch eine Stabilisierung der Strömung bei höheren Luftdurchsätzen erzielt werden. Insbesondere bei hohen Luftdurchsätzen im Nennleistungsbereich trägt diese Anordnung der Leiteinrichtung zu einer Stabilisierung der Strömung über den Kanalquerschnitt bei und kann darüber hinaus Ablösungen der Strömung am krümmungsinneren Kanalabschnitt entgegenwirken. Mit einer derartigen Anordnung der Leiteinrichtung läßt sich somit eine Verbesserung der Gemischaufbereitung über nahezu den gesamten Einsatzbereich der Brennkraftmaschine erreichen, wobei im Leerlauf und Teillastbereich eine verbrennungsfördernde Wirbelbildung unterstützt wird und bei höheren Luftdurchsätzen im Nennlastbereich eine gerichtete Strömung und ein hoher Luftdurchsatz erreicht werden.

Die Erzeugung eines Wirbels im Brennraum zur Verbesserung der Gemischaufbereitung im Leerlauf und Teillastbereich wird besonders wirksam, wenn der verstellbare Leitabschnitt der Leiteinrichtung am brennraumnahen Teil der Leiteinrichtung ausgebildet wird. Dadurch läßt sich insbesondere im stärker gekrümmten Abschnitt des Einlaßkanals eine wirksame Ablenkung bzw. Umlenkung des Luftstromes erreichen, ohne daß störende Einflüsse aus der Kanalgeometrie die durch die Leiteinrichtung verursachte Strömungsbeeinflussung wieder abschwächen.

Durch Ausbildung der Leiteinrichtung als Leitblech und Anpassung dieses Leitbleches an den Krümmungsverlauf des Einlaßkanals in Strömungsrichtung läßt sich vor allem für hohe Luftdurchsätze eine besonders wirkungsvolle Stabilisierung der Strömung über den gesamten Kanalquerschnitt und insbesondere am krümmungsinneren Kanalabschnitt erzielen.

Eine konstruktiv besonders vorteilhafte Ausbildung der Leiteinrichtung ergibt sich für mehrzylindrige Brennkraftmaschinen, wenn der verstellbare Leitabschnitt mit einer den Einlaßkanal durchdringenden Schwenkachse oder Schwenkwelle betätigt wird, und diese Schwenkachse bzw. Schwenkwelle parallel zur Längserstreckung der Brennkraftmaschine angeordnet ist. Durch diese Anordnung läßt sich die Schwenkachse oder Schwenkwelle so ausbilden, daß sie einstückig die jeweils hintereinander liegenden Einlaßkanäle durchdringt und die verstellbaren Leitabschnitte aller hintereinander angeordneten Zylinder somit durch ein Betätigungselement verstellbar sind.

Eine besonders gute Wirbelausbildung wird erreicht, wenn die Leiteinrichtung den Einlaßkanal in einen oberen und einen unteren bzw. einen krümmungsäußeren und einen krümmungsinneren Leitungsabschnitt unterteilt und zur Wirbelbildung im Brennraum der untere bzw. krümmungsinnere Leitungsabschnitt weitgehend verschlossen wird.

Weitere Vorteile und vorteilhafte Weiterbildungen der Erfindung ergeben sich aus den Unteransprüchen und der Beschreibung.

Ein Ausführungsbeispiel mit zwei Abwandlungen der Leitvorrichtung ist in der nachfolgenden Beschreibung und Zeichnung näher erläutert. Letztere zeigt in
- Fig. 1: einen Querschnitt durch einen erfindungsgemäßen Saugkanal einer Brennkraftmaschine in vereinfachter Darstellung,
- Fig. 2: diesen Saugkanal in einer zweiten Schaltstellung des verstellbaren Leitabschnittes,
- Fig. 3: eine stark vereinfacht dargestellte Abwandlung der Leiteinrichtung.

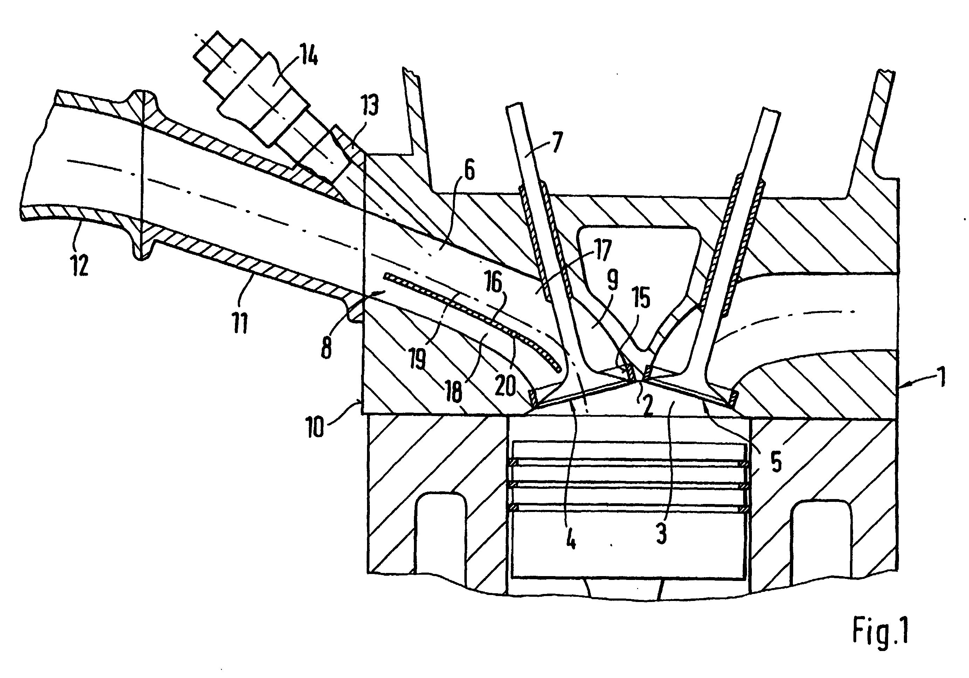

In Fig. 1 ist mit 1 der Zylinderkopf einer mehrzylindrigen Brennkraftmaschine bezeichnet, deren Gaswechsel durch vier Gaswechselventile je Zylinder gesteuert wird. Im Zylinderkopf 1 ist für jeden Zylinder der Dachabschnitt 2 eines Brennraumes 3 ausgebildet. In diesem Dachabschnitt sind jeweils zwei kreisförmige Einlaßöffnungen und zwei ebenfalls kreisförmige Auslaßöffnungen ausgebildet, von denen hier nur ein Einlaß 4 und ein Auslaß 5 dargestellt sind. Jede Einlaßöffnung ist gleichzeitig Mündungsabschnitt eines im Zylinderkopf ausgebildeten Einlaßkanals 6, der von einem mit der Einlaßöffnung zusammenwirkenden Einlaßventil 7 durchdrungen wird. Dieser Einlaßkanal 6 hat einen brennraumfemen Abschnitt 8, dessen Achsverlauf gerade bzw. nur wenig gekrümmt ausgebildet ist. Dieser brennraumferne Abschnitt 8 geht in einen stärker gekrümmten brennraumnahen Abschnitt 9 über, der in den Brennraum 3 mündet. Der brennraumfeme Abschnitt 8 reicht bis an eine Seitenfläche 10 des Zylinderkopfes und geht dort in einen an den Zylinderkopf 1 angeflanschten Saugstutzen 11 über, der mit der nur teilweise dargestellten Sauganlage 12 verbunden ist. Am Saugstutzen 11 ist weiterhin eine Aufnahme 13 für ein Einspritzventil 14 ausgebildet, das im oberen, brennraumabgewandten Bereich des Saugstutzens angeordnet ist Das Einspritzventil 13 ist auf an sich bekannte Weise so angeordnet, daß der erzeugte Kraftstoffstrahl im oberen Bereich des Einlaßkanals 6 in diesen eintritt und die Strahlachse auf das Zentrum der Einlaßöffnung 15 ausgerichtet ist. Es ist jedoch ohne weiteres möglich, die Brennkraftmaschine als direkteinspritzende Brennkraftmaschine auszubilden, wobei dann das Einspritzventil so am Zylinderkopf angeordnet ist, daß der Kraftstoffstrahl direkt in den Brennraum 3 eingebracht wird.

Der Einlaßkanal 6 wird über den wesentlichen Teil seiner Länge durch eine als Leitblech 16 ausgebildete Leiteinrichtung in einen oberen Kanalabschnitt 17 und einen unteren Kanalabschnitt 18 unterteilt. Dieses Leitblech 16 ist in Richtung des Strömungsverlaufes gekrümmt, wobei die Krümmungslinie weitgehend dem Verlauf der Einlaßkanalachse 19 folgt. Senkrecht zur Strömungsrichtung bzw. senkrecht zu der in Fig. dargestellten Schnittebene ist das Leitblech annähernd eben ausgeführt. Das Leitblech 16 ist so angeordnet, daß es unterhalb der Kanalachse 19 verläuft und der obere Kanalabschnitt und der untere Kanalabschnitt ein Querschnittsflächenverhältnis von etwa zwei zu eins aufweisen.

Das Leitblech ist auf einer den Einlaßkanal 6 durchdringenden Schwenkwelle 20 befestigt, durch deren Verdrehen die Position des Leitbleches veränderbar ist. Die in der Fig. 1 dargestellte Schwenkstellung des Leitbleches ist für den Betrieb der Brennkraftmaschine mit hohen Luftdurchsätzen im Nennleistungsbereich ausgelegt. Die Ausrichtung des Leitbleches ist dabei so, daß der Luftströmung nur ein sehr geringer Widerstand entgegengebracht wird und die Luftströmung sowohl über den oberen Kanalabschnitt 17 und den unteren Kanalabschnitt 18 erfolgt. Durch diese Aufteilung des Einlaßkanals wird insbesondere im Bereich des unteren Kanalabschnittes im Bereich der stärksten Kanalkrümmung eine Ablösung der Strömung verhindert.

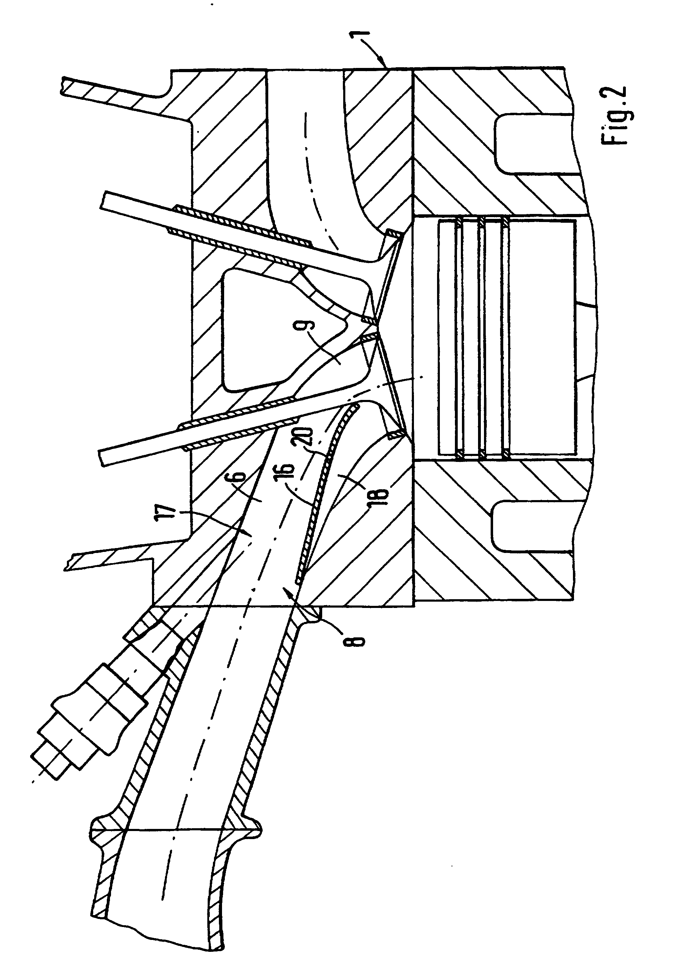

Bei der in Fig. 2 dargestellten Schalt- bzw. Schwenkstellung des Leitbleches 16 ist der untere Kanalabschnitt 18 durch Anlage des brennraumabgewandten Endes des Leitbleches an der Kanalwand weitgehend verschlossen. Gleichzeitig verjüngt sich über die Kanallänge der Strömungsquerschnitt des oberen Kanalabschnittes. Durch diese Änderung des Kanalquerschnittes wird im Leerlauf bzw. Teillastbetrieb der Brennkraftmaschine eine gezielte Wirbelbildung im Brennraum unterstützt.

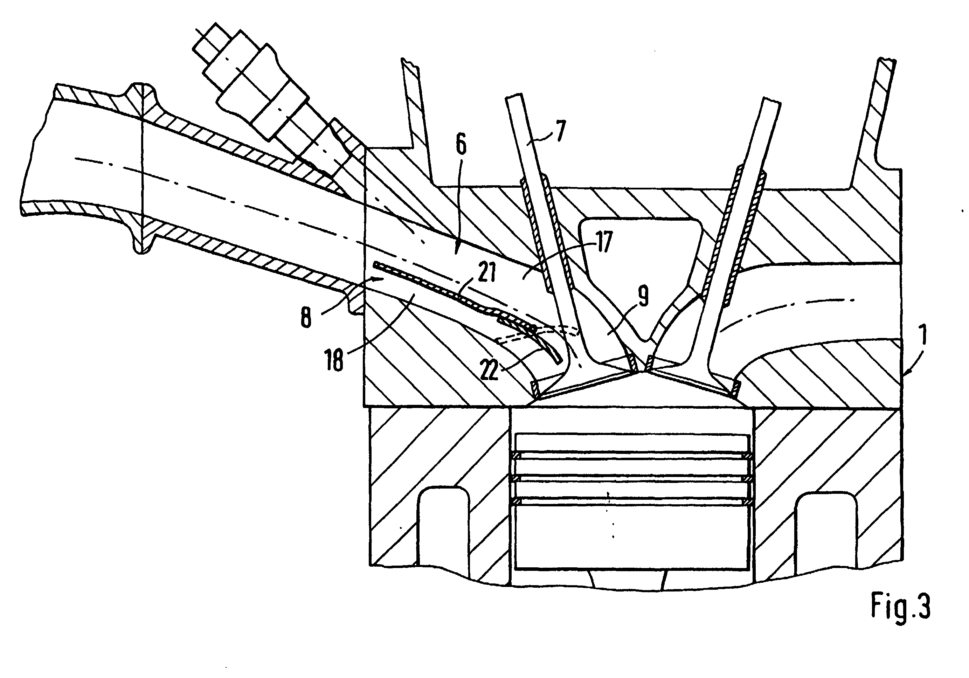

Bei der in Fig. 3 dargestellten Abwandlung des Ausführungsbeispiels ist das Leitblech 21 fest im Einlaßkanal 6 angeordnet. Der Einlaßkanal 6 wird durch dieses Leitblech 21 ebenfalls in einen oberen Kanalabschnitt 17 und einen unteren Kanalabschnitt 18 unterteilt, die Flächenverhältnisse der Kanalabschnitte entsprechen denen des ersten Ausführungsbeispiels. Das Leitblech 21 in dieser Abwandlung endet im Bereich des Überganges vom weniger stark gekrümmten Abschnitt 8 in den stärker gekrümmten Abschnitt 9 des Einlaßkanals 6. Am Ende des Leitbleches ist ein schwenkbarer Leitabschnitt 22 gelagert, der sich bis in die Nähe des Einlaßventils 7 erstreckt. In der durchgezogen gezeichneten Ausrichtung des schwenkbaren Leitabschnittes 22 wird das Leitblech durch diesen fluchtend verlängert. Diese Schalt- bzw. Schwenkstellung des schwenkbaren Leitabschnittes ist für den Betrieb der Brennkraftmaschine mit hohem Luftdurchsatz - wie zuvor beschrieben - vorgesehen. Für den Betrieb der Brennkraftmaschine im Leerlauf bzw. Teillastbereich wird der schwenkbare Leitabschnitt 22 in die gestrichelt dargestellte Position verschwenkt, so daß dieser an der unteren Kanalwand des Einlaßkanals 6 anliegt und den unteren Kanalabschnitt 18 verschließt und gleichzeitig den Durchlaßquerschnitt des oberen Kanalabschnittes 17 verringert. Durch diese Schwenkstellung wird wiederum die Wirbelbildung im Brennraum gefördert.

Bei der Ausbildung und Anordnung der Leiteinrichtung ist es ohne weiteres möglich, diese im brennraumnahen Bereich bis in den Bereich des Einlaßventils ragen zu lassen. Dabei kann dann beispielsweise der Ventilschaft des Einlaßventils durch eine entsprechende Aussparung im Leitblech 16 bzw. im schwenkbaren Leitabschnitt 22 umgriffen werden. Diese nicht dargestellte Aussparung ist dann so auszubilden, daß der Ventilschaft des Einlaßventils in allen Schwenklagen des Leitbleches 16 bzw. der schwenkbaren Leitabschnittes berührungsfrei umgriffen wird.

Ein Saugkanal mit einer derartigen Leiteinrichtung ist im Gegensatz zum dargestellten Anwendungsfall besonders geeignet für Brennkraftmaschinen mit Benzin-Direkteinspritzung, bei denen eine Gemischaufbereitung an den heißen Einlaßkanalwänden im Gegensatz zur Saugrohreinspritzung nicht erforderlich ist.

## Patentansprüche

1. Saugkanal für eine Brennkraftmaschine, die einen zumindest teilweise in einem Zylinderkopf (1) ausgebildeten Brennraum (3) aufweist, der über mindestens einen in seinen Dachbereich (2) einmündenden ventilgesteuerten Einlasskanal (6) mit Luft oder Kraftstoff-Luft-Gemisch beaufschlagt wird, wobei der im Zylinderkopf ausgebildete Einlasskanal einen dem Brennraum zugewandten stärker gekrümmten Abschnitt (9) und einen brennraumfernen weniger gekrümmten Abschnitt (8) aufweist und in einen an den Zylinderkopf angrenzenden Saugstutzen (11) übergeht, der zusammen mit dem Einlasskanal den Saugkanal bildet und mit einer Sauganlage (12) verbunden ist, sowie mit einer im Einlasskanal angeordneten Leiteinrichtung (16; 21,22) mit einem verstellbaren Leitabschnitt, **dadurch gekennzeichnet, dass** die als Leitblech ausgebildete Leiteinrichtung (16; 21,22) mit ihrem brennraumnahen Bereich zumindest annähernd bis in den stärker gekrümmten Abschnitt (9) des Einlasskanals (6) reicht, wobei das Leitblech (16; 21, 22) an den Krümmungsverlauf des Einlasskanals (6) in Strömungsrichtung angepasst ist, dergestalt, dass die Leiteinrichtung (16; 21,22) den Saugkanal in einen oberen (17) und einen unteren Kanalabschnitt (18) unterteilt, und **dass** der untere Kanalabschnitt (18) durch den schwenkbaren Leitabschnitt (16; 22) nahezu vollständig absperrbar ist.

2. Saugkanal für eine Brennkraftmaschine nach Anspruch 1, **dadurch gekennzeichnet, dass** zumindest der brennraumnahe Bereich der Leiteinrichtung (16; 21,22) als verstellbarer Leitabschnitt (16; 22) ausgebildet ist.

3. Saugkanal für eine Brennkraftmaschine nach Anspruch 1 oder 2, **dadurch gekennzeichnet, dass** der verstellbare Leitabschnitt (16; 22) als schwenkbare Klappe ausgebildet und auf einer den Einlasskanal (6) durchdringenden Schwenkachse oder Schwenkwelle (20) gelagert ist.

4. Saugkanal für eine Brennkraftmaschine nach Anspruch 1, **dadurch gekennzeichnet, dass** die Brennkraftmaschine mindestens zwei in einer Reihe angeordnete Zylinder mit jeweils mindestens einem Saugkanal und einer Leiteinrichtung aufweist, und **dass** die Schwenkachsen bzw. Schwenkwellen (20) parallel zur Längserstreckung der Brennkraftmaschine ausgerichtet sind.

5. Saugkanal für eine Brennkraftmaschine nach Anspruch 1, **dadurch gekennzeichnet, dass** die gesamte Leiteinrichtung (16) schwenkbar ist.

6. Saugkanal für eine Brennkraftmaschine nach Anspruch 1, **dadurch gekennzeichnet, dass** eine Einspritzdüse (14) so am Einlasskanalkanal (6) angeordnet ist, dass sie den oberen Kanalabschnitt (17) mit Kraftstoff beaufschlagt.

## Claims

1. An induction port for an internal-combustion engine comprising a combustion chamber (3) which is constructed at least in part in a cylinder head (1) and which is acted upon with air or a fuel / air mixture by way of at least one valve-controlled intake port (6) opening into its ceiling region (2), wherein the intake port formed in the cylinder head comprises a portion (9) bent to a greater degree and facing the combustion chamber and a portion (8) bent to a lesser degree and remote from the combustion chamber and passes into an induction pipe (11) which adjoins the cylinder head and which together with the intake port forms the induction port and is connected to an induction unit (12), and with a guide device (16; 21, 22) arranged in the intake port and with an adjustable guide portion, **characterized in that** the guide device (16; 21, 22) constructed in the form of a guide plate extends with the region thereof close to the combustion chamber at least substantially as far as the more bent portion (9) of the intake port (6), wherein the guide device (16; 21, 22) is adapted to the bending pattern of the intake port (6) in the flow direction in such a way that the guide device (16; 21, 22) subdivides the induction port into an upper port portion (17) and a lower port portion (18), and the lower port portion (18) can be shut off almost completely by the pivotable guide portion (16; 22).

2. An induction port for an internal-combustion engine according to Claim 1, **characterized in that** at least the region of the guide device (16; 21, 22) close to the combustion chamber is constructed in the form of an adjustable guide portion (16; 22).

3. An induction port for an internal-combustion engine according to Claim 1 or 2, **characterized in that** the adjustable guide portion (16; 22) is constructed in the form of a pivotable flap and is mounted on a pivot axle or a pivot shaft (20) passing through the intake port (6).

4. An induction port for an internal-combustion engine according to Claim 1, **characterized in that** the internal-combustion engine comprises at least two cylinders arranged in line with at least one induction port and one guide device in each case, and the pivot axles or pivot shafts (20) are orientated parallel to the longitudinal extension of the internal-combustion engine.

5. An induction port for an internal-combustion engine according to Claim 1, **characterized in that** the entire guide portion (16) is pivotable.

6. An induction port for an internal-combustion engine according to Claim 1, **characterized in that** an injection nozzle (14) is arranged on the intake port (6) in such a way that it acts upon the upper port portion (17) with fuel.

## Revendications

1. Canal d'aspiration pour une machine à combustion interne, qui présente une chambre de combustion (3) conçue au moins en partie dans une culasse (1), laquelle chambre est alimentée avec de l'air ou un mélange air-carburant par au moins un canal d'admission (6) commandé par soupape et débouchant dans sa zone supérieure (2), moyennant quoi le canal d'admission réalisé dans la culasse présente une partie (9) courbée plus fortement et tournée vers la chambre de combustion et une partie (8) moins courbée et éloignée de la chambre de combustion et se transforme en une tubulure d'aspiration (11) contiguë à la culasse, qui forme le canal d'aspiration avec le canal d'admission et est reliée à une installation d'aspiration (12), et avec un dispositif directeur (16 ; 21, 22) disposé dans le canal d'admission avec une partie directrice réglable, **caractérisé en ce que** le dispositif directeur (16 ; 21, 22) conçu comme une tôle-guide s'étend avec sa zone proche de la chambre de combustion au moins approximativement jusque dans la partie (9) plus courbée du canal d'admission (6), la tôle-guide (16; 21, 22) étant adaptée au tracé de courbure du canal d'admission (6) dans le sens d'écoulement, de telle sorte que le dispositif directeur (16 ; 21, 22) subdivise le canal d'aspiration en une partie de canal supérieure (17) et une partie de canal inférieure (18), et **en ce que** la partie de canal inférieure (18) peut être presque complètement bloquée par la partie directrice (16 ; 22) basculante.

2. Canal d'aspiration pour une machine à combustion interne selon la revendication 1, **caractérisé en ce qu'**au moins la zone proche de la chambre de combustion du dispositif directeur (16 ; 21, 22) est conçue comme une partie directrice (16 ; 22) réglable.

3. Canal d'aspiration pour une machine à combustion interne selon la revendication 1 ou 2, **caractérisé en ce** la partie directrice (16 ; 22) réglable est conçue comme un clapet basculant et est logé sur un axe ou un arbre de basculement (20) qui pénètre dans le canal d'admission.

4. Canal d'aspiration pour une machine à combustion interne selon la revendication 1, **caractérisé en ce que** la machine à combustion interne présente au moins deux cylindres disposés dans une rangée et équipés chacun d'au moins un canal d'aspiration et d'un dispositif directeur, et **en ce que** les axes ou arbres de basculement (20) sont orientés parallèlement à l'étirement longitudinal de la machine à combustion interne.

5. Canal d'aspiration pour une machine à combustion interne selon la revendication 1, **caractérisé en ce que** l'ensemble du dispositif directeur (16) est basculant.

6. Canal d'aspiration pour une machine à combustion interne selon la revendication 1, **caractérisé en ce** l'injecteur (14) est disposé sur le canal d'admission (6) de telle sorte qu'il alimente en carburant la partie de canal supérieure (17).
